Europäisches Patentamt

(19) European Patent Office

Office européen des brevets

(11) Numéro de publication : **0 292 371 B1**

(12) **FASCICULE DE BREVET EUROPEEN**

(45) Date de publication du fascicule du brevet :
18.12.91 Bulletin 91/51

(21) Numéro de dépôt : 88401177.6

(22) Date de dépôt : 13.05.88

(51) Int. Cl.⁵ : **B60G 15/06**

(54) **Train de roues directrices d'un véhicule automobile avec jambes téléscopiques à ressort incliné.**

(30) Priorité : 19.05.87 FR 8706992

(43) Date de publication de la demande :
23.11.88 Bulletin 88/47

(45) Mention de la délivrance du brevet :
18.12.91 Bulletin 91/51

(84) Etats contractants désignés :
DE ES GB IT

(56) Documents cités :
EP-A- 0 060 733
EP-A- 0 135 808
FR-A- 2 297 150
FR-A- 2 540 586
FR-A- 2 600 595
US-A- 3 057 640

(56) Documents cités :
PATENT ABSTRACTS OF JAPAN, vol. 9, no
231 (M-414)[1954], 18 septembre 1985, page
102 M 414; & JP-A-60 88 614 (DAIHATSU
KOGYO K.K.) 18-05-1985
PATENT ABSTRACTS OF JAPAN, vol. 6, no.
150 (M-148)[1028], 10 août 1982, page 117 M
148; & JP-A-57 69 134 (KAYABA KOGYO K.K.)
27-04-1982

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Camizuli, Alain**
**84 rue Solférino**
**F-92700 Colombes (FR)**

(74) Mandataire : **Berger, Helmut et al**
**Cabinet Z. WEINSTEIN 20, avenue de**
**Friedland**
**F-75008 Paris (FR)**

## Description

La présente invention concerne un train de roues directrices d'un véhicule automobile, avec jambes télescopiques à ressort incliné ou excentrique.

On connaît de tels trains comprenant d'une manière générale, pour chacune des deux roues, une jambe de suspension comportant d'une part une tige supérieure coulissant dans un corps tubulaire inférieur solidaire d'un support de roues et, d'autre part, un ressort de forme générale hélicoïdale entourant la tige et dont la spire inférieure prend appui sur une coupelle solidaire du corps tubulaire et prolongée d'une extension radiale formant levier de direction parallèle à la roue.

Cependant, la conception de ces trains connus exige l'utilisation d'un ensemble levier-coupelle-ressort de la jambe de suspension de l'une des roues directrices du véhicule de structure symétrique à celui de la jambe de suspension de l'autre roue directrice. En d'autres termes, une jambe de suspension de l'une des roues directrices du véhicule possède un ensemble levier-coupelle-ressort qui lui est spécifique et qui ne peut donc s'adapter pour la jambe de suspension de l'autre roue directrice.

La présente invention a pour but d'éliminer l'inconvénient ci-dessus des trains de roues directrices connus en proposant un ensemble levier-coupelle-ressort de jambe de suspension qui peut être monté indifféremment en association avec l'une ou l'autre des roues directrices du véhicule.

Pour cela, le train de roues directrices suivant l'invention est caractérisé en ce que les deux ressorts des jambes de suspension, montés chacun d'une façon excentrique par rapport à l'axe de la tige, sont identiques, et en ce que la spire inférieure de chaque ressort a un diamètre moyen inférieur au diamètre moyen des autres spires, est coaxiale à la tige et prend appui sur la coupelle associée sur plus d'un demi-tour, et en ce que les deux coupelles sont identiques et comportent chacune sur leur face supérieure deux dépressions diamétralement opposées formant butées alternativement pour l'extrémité de la spire inférieure de l'un ou l'autre des deux ressorts.

Selon une autre caractéristique de l'invention, l'extrémité libre de la spire inférieure de chaque ressort est courbée vers le bas et s'engage dans l'une des deux dépressions précitées de la coupelle associées en butant contre une face extrême de la dépression.

Selon encore une autre caractéristique de l'invention, chaque ressort étant excentré vers la roue associée, les deux dépressions de la coupelle associées sont situées au voisinage du plan diamétral perpendiculaire au levier, et l'extrémité de la spire inférieure du ressort coopère avec la face extrême de butée de la dépression située du côté de la roue.

Selon enfin une autre caractéristique de l'invention, chaque ressort étant excentré vers la roue associée, les deux dépressions de la coupelle associée sont situées au voisinage du plan longitudinal médian du levier et la demi-spire inférieure extrême de la spire inférieure du ressort est située du côté de la roue.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 est une vue de dessus simplifiée avec coupe suivant la ligne I-I de la figure 2 du train de roues directrices d'un véhicule automobile suivant l'invention ;

La figure 2 est une vue en coupe transversale d'une jambe de suspension associée à la roue directrice gauche du véhicule ;

La figure 3 est une vue de dessus suivant la flèche III de la figure 2 ;

La figure 4 est une vue, partielle suivant la flèche IV de la figure 3, d'une jambe de suspension associée à la roue gauche ; et

La figure 5 est une vue partielle, suivant la flèche V de la figure 3, d'une jambe de suspension associée à la roue droite.

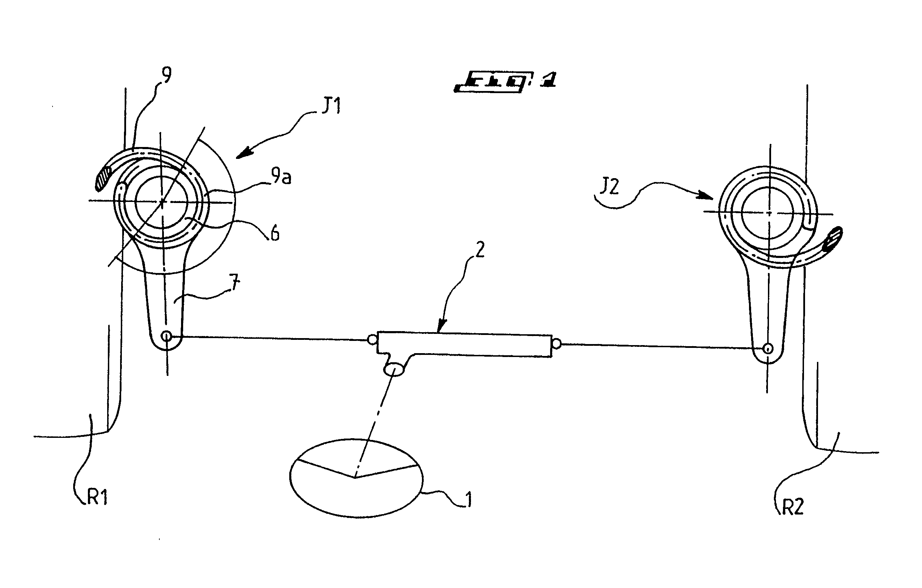

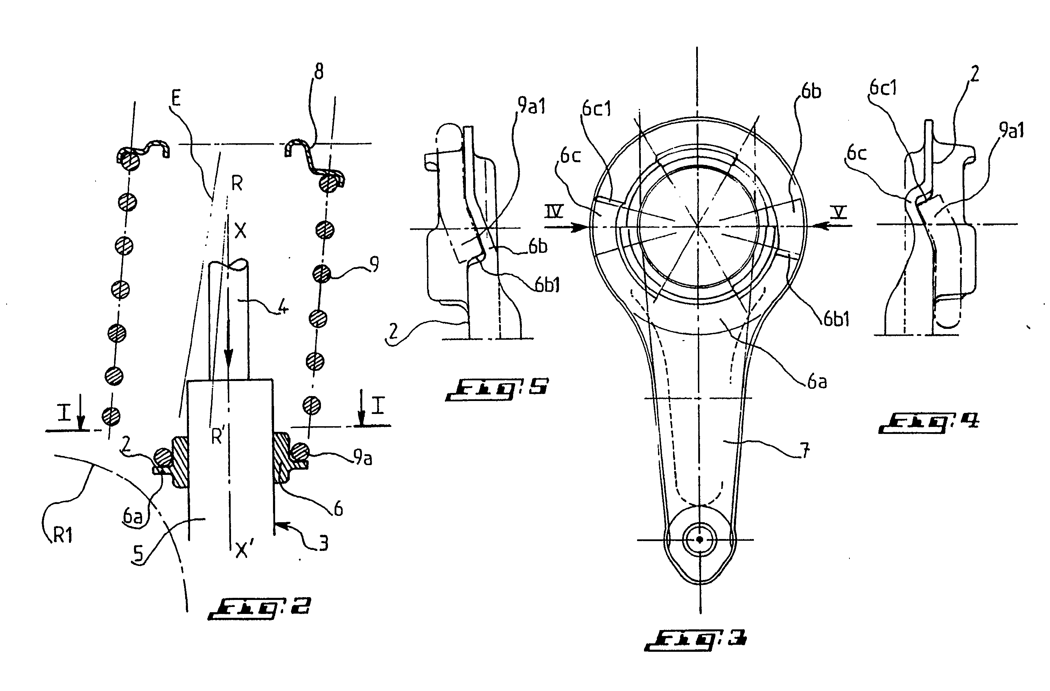

En se reportant aux figures, la référence 1 désigne un volant de direction d'un véhicule automobile entraînant par l'intermédiaire d'un mécanisme usuel de direction 2 les deux roues directrices R1 et R2 respectivement de gauche et de droite du véhicule.

Le train de roues directrices du véhicule comprend, pour chacune des deux roues R1 et R2, une jambe de suspension J1 et J2 comportant un amortisseur hydraulique 3 constitué essentiellement d'une tige supérieure télescopique 4 montée de façon coulissante dans un élément tubulaire inférieur 5 solidaire d'un support de roue (non représenté) ; une coupelle inférieure 6 solidaire de l'élément tubulaire 5 et prolongée d'une extension radiale formant levier de direction 7 parallèle à la roue associée ; une cuvette supérieure 8 ; et un ressort précontraint 9 de forme généralement hélicoïdale entourant l'amortisseur 3 et monté entre la cuvette supérieure 8 et la coupelle 6. La spire inférieure 9a du ressort 9 prend appui sur une partie annulaire extérieure 6a de la coupelle 6. De plus, la coupelle 6 et le levier de direction 7 de chaque jambe de suspension sont réalisés en une seule pièce.

Les deux ressorts 9 sont, de façon connue, montés chacun de façon excentrique par rapport à l'axe X-X' de l'amortisseur 3 de façon que l'axe longitudinal R-R' du ressort soit incliné par rapport à l'axe X-X' vers la roue directrice associée au ressort. Selon l'invention, les deux ressorts 9 sont identiques et leur spire inférieure a un diamètre moyen inférieur au diamètre moyen des autres spires du ressort et est excentrée par rapport à celles-ci et coaxiale à la tige 4 ou à l'élément tubulaire 5. De plus, la spire inférieure 9a se trouve en appui sur la coupelle associée 6 suivant une longueur d'appui correspondant à un angle de plus de 180°, soit plus d'un demi-tour au repos, le ressort étant non comprimé. Les deux coupelles 6 des jambes de suspension sont identiques et comportent chacune sur la face supérieure de la partie annulaire 6a deux dépressions 6b, 6c diamétralement opposées formant butées alternativement pour l'extrémité 9a1 de la spire inférieure 9a de l'un ou de l'autre des deux ressorts 9. Plus précisément, l'extrémité 9a1 de la spire inférieure 9a de chaque ressort 9 est courbée vers le bas et s'engage dans l'une des deux dépressions 6b, 6c de la coupelle associée en butant contre une face extrême 6b1 ou 6c1 de la dépression, les deux dépressions 6b et 6c de la coupelle associée étant situées au voisinage du plan diamétral P perpendiculaire au levier 7. L'extrémité libre de la spire inférieure du ressort 9 de la jambe de suspension J1 associée à la roue gauche R1 du véhicule coopère avec la face extrême de butée 6c1 de la dépression 6c située du côté de la roue R1 tandis que l'extrémité de la spire inférieure 9a du ressort de la jambe de suspension J2 associée à la roue droite R2 du véhicule coopère avec la face extrême de butée 6b1 de la dépression 6b située du côté de la roue R2.

Selon une variante d'exécution non représentée, au lieu d'être situées au voisinage du plan diamétral perpendiculaire au levier comme expliqué ci-dessus, les deux dépressions 6b et 6c de la coupelle associée 6 peuvent être situées au voisinage du plan longitudinal médian du levier et la demi-spire inférieure extrême de la spire inférieure du ressort associé à la jambe de suspension J1 ou J2 est située du côté de la roue R1 ou R2, respectivement.

Les positionnements ci-dessus des deux dépressions 6b et 6c de chaque coupelle 6 vise à transmettre correctement l'effort du ressort 9 associé sur la coupelle, donc sur l'élément tubulaire 5, effort excentré du côté de la roue comme indiqué par la référence E représentant la direction d'efforts pour réduire les frottements de coulissement de la tige 4 dus au déport transversal de la jambe de suspension par rapport à la roue directrice associée.

On comprend que chaque ensemble constitué par le levier 7, la coupelle 6 et le ressort 9 peut être utilisé indifféremment en association avec la roue gauche R1 ou la roue droite R2 du véhicule automobile. Il est donc ainsi possible de monter le levier 7 à droite ou à gauche du véhicule et de disposer le ressort 9 sur la coupelle 6 après lui avoir fait subir la rotation nécessaire autour de son axe longitudinal pour que l'extrémité de la spire inférieure vienne en butée contre la face extrême de butée correspondante 6b1 ou 6c1. On réduit ainsi les coûts de fabrication de la coupelle d'appui du ressort tout en bénéficiant d'un gain de poids dû à la réduction du diamètre moyen de la dernière spire de chaque ressort.

## Revendications

1. Train de roues directrices de véhicule automobile, comprenant pour chacune des deux roues une jambe de suspension comportant d'une part une tige supérieure coulissant dans un corps tubulaire inférieur solidaire d'un support de roue et, d'autre part, un ressort de forme générale hélicoïdale entourant la tige de façon excentrique et dont la spire inférieure prend appui sur une coupelle solidaire du corps tubulaire et prolongée d'une extension radiale formant levier de direction parallèle à la roue, caractérisé en ce que les deux ressorts (9) sont identiques, en ce que la spire inférieure (9a) de chaque ressort (9) a un diamètre moyen inférieur au diamètre moyen des autres spires, est excentrée par rapport à celles-ci et prend appui sur la coupelle associée (6) coaxialement à la tige (4) sur plus d'un demi-tour, et en ce que les deux coupelles (6) sont identiques et comportent chacune sur leur face supérieure deux dépressions (6b ; 6c) diamétralement opposées formant butées alternativement pour l'extrémité (9a1) de la spire inférieure (9a) de l'un ou de l'autre des deux ressorts (9).

2. Train de roues directrices selon la revendication 1, caractérisé en ce que l'extrémité libre de la spire inférieure (9a) de chaque ressort (9) est courbée vers le bas et s'engage dans l'une des deux dépressions (6b ; 6c) de la coupelle asssociée (6) en butant contre une face extrême (6b1 ; 6c1) de la dépression.

3. Train de roues directrices selon la revendication 1 ou 2, dans lequel chaque ressort (9) est excentré vers la roue associée (R1 ; R2), caractérisé en ce que les deux dépressions (6b ; 6c) de la coupelle associée (6) sont situées au voisinage du plan diamétral perpendiculaire au levier (7), et en ce que l'extrémité de la spire inférieure (9a) du ressort (9) coopère avec la dépression située du côté de la roue (R1 ; R2).

4. Train de roues directrices selon la revendication 1 ou 2, dans lequel chaque ressort (9) est excentré vers la roue associée (R1 ; R2), caractérisé en ce que les deux dépressions (6b ; 6c) de la coupelle associée (6) sont situées au voisinage du plan longitudinal médian du levier (7), et en ce que la demi-spire inférieure extrême de la spire inférieure (9a) du ressort (9) est située du côté de la roue (R1 ; R2).

## Patentansprüche

1. Satz von lenkbaren Rädern eines Kraftfahrzeugs, mit für jedes der beiden Räder einem Federbein, daß einerseits eine in einem mit einem Radträger fest verbundenen unteren röhrformigen Körper gleitbare obere Stange und andererseits eine die Stange in exzentrischer Weise umgebende Feder allgemeiner wendelförmigen Gestalt aufweist, wobei die untere Federwindung sich an einem mit dem röhrformigen Körper fest verbundenen und durch einen, einen parallel zum Rad verlaufenden Lenkhebel bildenden radialen Ansatz verlängerten Teller abstützt, dadurch gekennzeichnet, daß die beiden Federn (9) gleichartig sind, daß die untere Windung (9a) jeder Feder (9) einen kleineren mittleren Durchmesser als der mittlere Durchmesser der anderen Windungen hat, exzentrisch gegenüber diesen ist und sich koaxial zu der Stange (4) über mehr als eine halbe Drehung an dem zugeordneten Teller (6) abstützt und daß die beiden Teller (6) gleichartig sind und jeweils an ihrer Oberseite zwei diametral entgegengesetzte Vertiefungen (6b ; 6c) aufweisen, die wechselweise Anschläge für das Ende (9a1) der unteren Windung (9a) der einen oder der anderen der beiden Federn (9) bilden.

2. Satz von lenkbaren Rädern gemäß Anspruch 1, dadurch gekennzeichnet, daß das freie Ende der unteren Windung (9a) jeder Feder (9) nach unten gebogen ist und in eine der beiden Vertiefungen (6b; 6c) des zugeordneten Tellers (6) unter beschlag gegen eine Endseite (6b1 ; 6c1) der Vertiefung eingreift.

3. Satz von lenkbaren Rädern gemäß Anspruch 1 oder 2, bei welchem jede Feder (9) exzentrisch zum zugeordneten Rad (R1 ; R2) hin angeordnet ist, dadurch gekennzeichnet, daß die beiden Vertiefungen (6b ; 6c) des zugeordneten Tellers (6) im Bereich der senkrecht zum Hebel (7) verlaufenden diametralen Ebene gelegen sind und daß das Ende der unteren Windung (9a) der Feder (9) mit der zum Rad (R1 ; R2) hin liegenden Vertiefung zusammenwirkt.

4. Satz von lenkbaren Rädern gemäß Anspruch 1 oder 2, bei welchem jede Feder (9) exzentrisch zum zugeordneten Rad (R1 ; R2) hin angeordnet ist, dadurch gekennzeichnet, daß die beiden Vertiefungen (6b ; 6c) des zugeordneten Tellers (6) im Bereich der Lägsmittelebene des Hebels (7) gelegen sind und daß die untere Halbenwindung der unteren Windung (9a) der Feder (9) zum Rad (R1 ; R2) hin liegt.

## Claims

1. Set of steerable wheels of automotive vehicle comprising for each one of the two wheels one suspension strut comprising on the one hand an upper rod sliding within a lower tubular body made fast to a wheel support and on the other hand a spring of general helical shape surrounding the rod in an eccentric manner and the bottom whorl of which is bearing upon a cup made fast to the tubular body and prolonged by a radial extension forming a steering lever parallel to the wheel, characterized in that both springs (9) are identical, in that the bottom whorl (9a) of each spring (9) has a mean diameter smaller than the mean diameter of the other whorls, is eccentric with respect to the latter and is bearing upon the associated cup (6) coaxially to the rod (4) over more than one half turn and in that both cups (6) are identical and comprise each one on their top face two diametrally opposite dips (6b ; 6c) forming stops alternately for the end (9a1) of the bottom whorl (9a) of either one of the two springs (9).

2. Set of steerable wheels according to claim 1, characterized in that the free end of the bottom whorl (9a) of each spring (9) is curved downwards and extends into one of the two dips (6b ; 6c) of the associated cup (6) while abutting against an end face (6b1 ; 6c1) of the dip.

3. Set of steerable wheels according to claim 1 or 2, wherein each spring (9) is eccentric towards the associated wheel (R1 ; R2), characterized in that both dips (6b ; 6c) of the associated cup (6) are located in the vicinity of the diametral plane perpendicular to the lever (7) and in that the end of the bottom whorl (9a) of the spring (9) co-operates with the dip located towards the wheel (R1 ; R2).

4. Set of steerable wheels according to claim 1 or 2, wherein each spring (9) is eccentric towards the associated wheel (R1 ; R2), characterized in that both dips (6b ; 6c) of the associated cup (6) are located in the vicinity of the central longitudinal plane of the lever (7) and in that the lower end half whorl of the bottom whorl (9a) of the spring (9) is located towards the wheel (R1 ; R2).

Fig. 1

Fig. 4

Fig. 3

Fig. 5

Fig. 2

Fig. 1

6